# EUROPÄISCHE PATENTANMELDUNG

(11) **EP 3 705 208 A1**
(43) Veröffentlichungstag der Anmeldung: **09.09.2020**
(21) Anmeldenummer: 19160534.4
(22) Anmeldetag: 04.03.2019
(51) Int. Cl.: B22F 3/105, B08B 5/04, B33Y 10/00, B33Y 30/00, B33Y 40/00, B29C 64/153, B29C 64/20, B29C 64/35

(54) **VORRICHTUNG UND VERFAHREN ZUR ADDITIVEN FERTIGUNG WENIGSTENS EINES BAUTEILS**

(71) Anmelder: Siemens Aktiengesellschaft, 80333 München (DE)
(72) Erfinder: Fenske, Sören, 10625 Berlin (DE); Küsters, Yves, 10829 Berlin (DE)

(57) **Zusammenfassung**

Die Erfindung betrifft eine Vorrichtung (10) zur additiven Fertigung von Bauteilen (38), mit wenigstens einer Aufnahmeeinrichtung (12), welche zumindest einen Aufnahmebereich (14) in Umfangsrichtung (16) des Aufnahmebereiches (14) zumindest teilweise umlaufend begrenzt, wobei in dem Aufnahmebereich (14), welcher an sich auf einer Seite (S1) offen ist, wenigstens ein pulverförmiges Ausgangsmaterial (18) aufnehmbar ist, aus welchem das jeweilige Bauteil (38) unter mittels der Vorrichtung (10) bewirkbarem Erwärmen des pulverförmigen Ausgangsmaterials (18) schichtweise herstellbar ist, umfassend eine Saugeinrichtung (40), welche eine auf der Seite (S1) angeordnete, den Aufnahmebereich (14) zumindest auf der Seite (S1) zumindest teilweise überdeckende und auf der Seite (S1) in Umfangsrichtung (16) des Aufnahmebereiches (14) zumindest teilweise umlaufend mit der Aufnahmeeinrichtung (!2) abschließende Haube (42) aufweist, über welche mittels der Saugeinrichtung (40) zumindest ein überschüssiger Teil (44) des pulverförmigen Ausgangsmaterials (18) aus dem Aufnahmebereich (14) absaugbar ist.

## Beschreibung

Die Erfindung betrifft eine Vorrichtung zur additiven Fertigung von Bauteilen gemäß dem Oberbegriff von Patentanspruch 1. Des Weiteren betrifft die Erfindung ein Verfahren zur additiven Fertigung wenigstens eines Bauteils gemäß dem Oberbegriff von Patentanspruch 10.

Generative Fertigungsverfahren zum generativen Fertigen sowie Vorrichtungen zum Durchführen von solchen generativen Fertigungsverfahren sind aus dem allgemeinen Stand der Technik bereits hinlänglich bekannt. Das jeweilige generative Fertigungsverfahren wird auch als additives Fertigungsverfahren oder additive Fertigung bezeichnet, sodass das jeweilige Bauteil additiv gefertigt wird. Hierbei wird das jeweilige Bauteil schichtweise, das heißt Schicht für Schicht, hergestellt. Dies bedeutet, dass jeweilige Schichten hergestellt und jeweils zumindest teilweise aufeinander angeordnet und miteinander verbunden werden, sodass das jeweilige Bauteil aus den Schichten und somit schichtweise beziehungsweise Schicht für Schicht hergestellt wird. Um die jeweilige Schicht herzustellen, wird beispielsweise ein einfach auch als Pulver bezeichnetes, pulverförmiges Ausgangsmaterial mit wenigstens einem beispielsweise als Laserstrahl ausgebildeten Energiestrahl beaufschlagt und dadurch erwärmt. Dadurch werden zunächst lose, das heißt zunächst nicht miteinander verbundene Partikel des Pulvers miteinander verbunden, wodurch die jeweilige Schicht hergestellt wird.

Aufgabe der vorliegenden Erfindung ist es, eine Vorrichtung und ein Verfahren zu schaffen, sodass wenigstens ein Bauteil besonders einfach und somit besonders zeit- und kostengünstige additiv gefertigt werden kann.

Diese Aufgabe wird erfindungsgemäß durch eine Vorrichtung mit den Merkmalen des Patentanspruchs 1 sowie durch ein Verfahren mit den Merkmalen des Patentanspruchs 10 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine auch als Anlage bezeichnete Vorrichtung zur additiven Fertigung von Bauteilen. Dies bedeutet, dass die Vorrichtung zum Durchführen wenigstens eines generativen Fertigungsverfahrens ausgebildet ist, mittels welchem das jeweilige Bauteil herstellbar ist beziehungsweise hergestellt wird. Das generative Fertigungsverfahren wird auch als additives Fertigungsverfahren oder additive Fertigung bezeichnet, sodass das jeweilige Bauteil mittels der Vorrichtung additiv hergestellt werden kann. Die Vorrichtung weist dabei wenigstens oder genau eine Aufnahmeeinrichtung auf, welche zumindest oder genau einen Aufnahmebereich begrenzt. Dabei ist der Aufnahmebereich entlang seiner beziehungsweise in seine Umfangsrichtung zumindest teilweise, insbesondere zumindest überwiegend, das heißt mehr als zu Hälfte, oder vollständig, umlaufend durch die Aufnahmeeinrichtung begrenzt. In dem Aufnahmebereich ist wenigstens ein einfach auch als Pulver bezeichnetes, pulverförmiges Ausgangsmaterial aufnehmbar, aus welchem das jeweilige Bauteil unter mittels der Vorrichtung bewirkbarem Erwärmen des pulverförmigen Ausgangsmaterials schichtweise herstellbar ist. Mit anderen Worten ist die Vorrichtung dazu ausgebildet, zumindest einen Teil des in dem Aufnahmebereich anordenbaren beziehungsweise angeordneten Ausgangsmaterials zu erwärmen und dadurch wenigstens eine Schicht herzustellen, aus welcher das jeweilige Bauteil schichtweise, das heißt Schicht für Schicht und somit additiv herstellbar ist beziehungsweise hergestellt wird.

Dabei ist der Aufnahmebereich an sich, das heißt für sich alleine betrachtet, auf wenigstens oder genau einer Seite offen. Darunter ist insbesondere zu verstehen, dass der Aufnahmebereich an sich zu der Seite hin offen ist. Hierdurch kann beispielsweise das pulverförmige Ausgangsmaterial von der offenen Seite aus beziehungsweise über die offene Seite in dem Aufnahmebereich angeordnet, das heißt in den Aufnahmebereich eingebracht und dabei beispielsweise in den Aufnahmebereich eingefüllt werden.

Beispielsweise weist die Vorrichtung wenigstens oder genau ein Förderelement auf, welches relativ zu der Aufnahmeeinrichtung beziehungsweise relativ zu dem Aufnahmebereich entlang wenigstens einer Bewegungsrichtung, insbesondere translatorisch, bewegbar ist. Mittels des Förderelements kann beispielsweise das zunächst in einem Reservoir aufgenommene pulverförmige Ausgangsmaterial aus dem Reservoir über die offene Seite in den Aufnahmebereich gefördert und dadurch in den Aufnahmebereich eingebracht werden. Hierzu wird beispielsweise das Förderelement entlang der Bewegungsrichtung relativ zu der Aufnahmeeinrichtung, insbesondere translatorisch, bewegt. Da der Aufnahmebereich auf der genannten Seite offen ist, weist der Aufnahmebereich beispielsweise auf der Seite wenigstens oder genau eine insbesondere als Durchgangsöffnung ausgebildete Öffnung auf. Die Öffnung erstreckt sich beispielsweise in einer insbesondere gedachten beziehungsweise virtuellen Ebene.

Das pulverförmige Ausgangsmaterial umfasst beispielsweise voneinander lose, das heißt nicht miteinander verbundene und insbesondere eigensteife Partikel, sodass das pulverförmige Ausgangsmaterial auch als granulare Materie bezeichnet wird. Unter dem Merkmal, dass das Bauteil unter mittels der Vorrichtung bewirkbarem Erwärmen des pulverförmigen Ausgangsmaterials schichtweise herstellbar ist, kann insbesondere verstanden werden, dass zumindest ein Teil der in dem Aufnahmebereich angeordneten beziehungsweise anordenbaren und zunächst voneinander losen Partikel des pulverförmigen Ausgangsmaterials mittels der Vorrichtung erwärmt und dadurch miteinander verbunden werden, wodurch wenigstens oder genau eine Schicht zum schichtweisen Herstellen des Bauteils herstellbar ist beziehungsweise hergestellt wird. Um das pulverförmige Ausgangsmaterial beziehungsweise dessen zunächst voneinander losen Partikel zu erwärmen, wird zumindest der zuvor genannte Teil des pulverförmigen Ausgangsmaterials beispielsweise mit wenigstens oder genau einem Energiestrahl bestrahlt und somit beaufschlagt. Hierzu umfasst die Vorrichtung beispielsweise wenigstens oder genau eine Strahlenquelle, mittels welcher der Energiestrahl bereitstellbar ist beziehungsweise bereitgestellt wird. Der Energiestrahl ist beispielsweise ein Laserstrahl und trifft zum Erwärmen zumindest des Teils des pulverförmigen Ausgangsmaterials auf das pulverförmige Ausgangsmaterial beziehungsweise auf den Teil des pulverförmigen Ausgangsmaterials auf, insbesondere während der Energiestrahl relativ zu dem in dem Aufnahmebereich angeordneten Ausgangsmaterial beziehungsweise relativ zu der Aufnahmeeinrichtung, insbesondere translatorisch, bewegt wird.

Beispielsweise wird zumindest der Teil des pulverförmigen Ausgangsmaterials beziehungsweise werden die Partikel des pulverförmigen Ausgangsmaterials durch das Erwärmen geschmolzen, das heißt an- und/oder aufgeschmolzen, wodurch die zunächst voneinander losen und somit zunächst nicht miteinander verbundenen Partikel miteinander verbunden werden. Ferner ist es denkbar, dass die Partikel durch das Erwärmen zusammengebacken, das heißt miteinander verbacken und dadurch miteinander verbunden werden. Bei dem mittels der Vorrichtung durchführbaren generativen Fertigungsverfahren kann es sich somit beispielsweise um ein Energiestrahlschmelzen, insbesondere um ein Laserstrahlschmelzen, oder um ein Energiestrahlsintern, insbesondere um ein Laserstrahlsintern, handeln. Insbesondere kann es sich bei dem generativen Fertigungsverfahren um selektives Laserschmelzen (SLM), um direktes Laserschmelzen (DMLS), um selektives Lasersintern (SLS), um ein Pulverbettverfahren (PBF) oder um ein anderes generatives Fertigungsverfahren handeln.

Um nun das jeweilige Bauteil besonders einfach und somit besonders zeit- und kostengünstig additiv herstellen zu können, ist es erfindungsgemäß vorgesehen, dass die Vorrichtung wenigstens oder genau eine Saugeinrichtung umfasst. Die Saugeinrichtung weist eine auf der Seite angeordnete und den Aufnahmeraum zumindest auf der Seite zumindest teilweise, insbesondere zumindest überwiegend oder vollständig, überdeckende Haube auf, welche auch als Saughaube oder Absaughaube bezeichnet wird und auf der Seite mit der Aufnahmeeinrichtung in Umfangsrichtung des Aufnahmeraums zumindest teilweise, insbesondere zumindest überwiegend oder vollständig, umlaufend abschließt. Hierunter ist insbesondere zu verstehen, dass die Haube auf der Seite in Umfangsrichtung des Aufnahmebereichs zumindest teilweise, insbesondere zumindest überwiegend oder vollständig, umlaufend zumindest mittelbar, insbesondere direkt, mit der Aufnahmeeinrichtung verbunden ist, sodass auf der Seite und in Umfangsrichtung des Aufnahmebereichs zumindest teilweise, insbesondere zumindest überwiegend oder vollständig, umlaufend keine Spalte, Ritzen, Durchgangsöffnungen oder dergleichen zwischen der Haube und der Aufnahmeeinrichtung existiert.

Über die Haube ist mittels der Saugeinrichtung zumindest ein überschüssiger Teil des pulverförmigen Ausgangsmaterials aus dem Aufnahmebereich absaugbar. Der überschüssige Teil des pulverförmigen Ausgangsmaterials wird auch als überschüssiges Pulver bezeichnet. Unter dem überschüssigen Pulver ist ein Teil beziehungsweise eine Teilmenge des pulverförmigen Ausgangsmaterials zu verstehen, wobei die Teilmenge in dem Aufnahmebereich angeordnet ist beziehungsweise wurde und nicht zur Herstellung des jeweiligen Bauteils verwendet wurde. Mit anderen Worten wurde beziehungsweise ist zwar das überschüssige Pulver in dem Aufnahmebereich angeordnet, jedoch wird das überschüssige Pulver nicht verwendet, um das jeweilige Bauteil herzustellen, sodass das überschüssige Pulver, insbesondere nach dem Herstellen des Bauteils mittels der Saugeinrichtung und dabei über die Saughaube aus dem Aufnahmebereich abgesaugt wird. Da die Saughaube der auch als Saugereinheit oder Saugeinheit bezeichneten Saugeinrichtung in Umfangsrichtung des Aufnahmebereichs zumindest teilweise, insbesondere zumindest überwiegend oder vollständig, umlaufend mit der beispielsweise auch als Plattform bezeichneten Aufnahmeeinrichtung abschließt, kann eine besonders hohe Saugleistung realisiert werden, mit der das überschüssige Pulver aus dem Aufnahmebereich abgesaugt werden kann. Außerdem kann dadurch beispielsweise ein unerwünschtes Eindringen von unerwünschten Gasen und/oder Fremdkörpern in den Aufnahmebereich vermieden werden, sodass eine besonders vorteilhafte Herstellung des jeweiligen Bauteils realisierbar ist. Des Weiteren kann das überschüssige Pulver besonders einfach und dabei beispielsweise automatisch oder automatisiert aus dem Aufnahmebereich abgesaugt werden, sodass die Herstellung des Bauteils zeit- und kostengünstig durchgeführt werden kann.

Insbesondere ist die Saugeinrichtung dazu ausgebildet, ein Vakuum oder einen Unterdruck, insbesondere im Vergleich zum Aufnahmebereich, zu erzeugen beziehungsweise bereitzustellen, sodass das überschüssige Pulver mittels des Vakuums beziehungsweise mittels des Unterdrucks und somit effektiv und effizient aus dem Aufnahmebereich abgesaugt werden kann. Durch das Absaugen wird das überschüssige Pulver beispielsweise aus dem Aufnahmebereich durch die genannte Durchgangsöffnung hindurch und dabei beispielsweise zumindest im Wesentlichen senkrecht zur zuvor genannten Ebene gefördert und dadurch aus dem Aufnahmebereich hindurchgefördert, sodass der Aufnahmebereich zeit- und kostengünstig von dem überschüssigen Pulver befreit werden kann.

Insbesondere ermöglicht die Erfindung eine Automatisierung im Hinblick auf ein Entfernen des überschüssigen Pulvers aus dem Aufnahmebereich. Insbesondere ermöglicht die Erfindung eine Automatisierung der gesamten Herstellung des jeweiligen Bauteils, wobei die gesamte Herstellung sowohl das Herstellen des Bauteils an sich als auch das daran anschließende Absaugen des überschüssigen Pulvers aus dem Aufnahmebereich umfasst. Die erfindungsgemäße Vorrichtung ermöglicht darüber hinaus ein bezüglich des hergestellten Bauteils kontaktfreies Absaugen des überschüssigen Pulvers, wodurch Beschädigungen des hergestellten Bauteils vermieden werden können. Hierdurch können auch besonders filigrane Bauteile, welche nicht sichtbar in dem Aufnahmebereich und dabei beispielsweise in einem durch das in dem Aufnahmebereich angeordnete Ausgangsmaterial gebildeten Pulverbett liegen, hergestellt werden, wobei nach deren Herstellung des überschüssige Pulver abgesaugt werden kann, ohne die filigranen Bauteile zu beschädigen. Darüber hinaus kann durch die Erfindung vermieden werden, dass das überschüssige Pulver an eine Umgebung der Vorrichtung und/oder in Kontakt mit Menschen gelangt, wodurch eine unerwünschte Pulverbelastung besonders gering gehalten werden kann.

Der Erfindung liegen insbesondere die folgenden Erkenntnisse zugrunde: Üblicherweise muss bei einem generativen Fertigungsverfahren abgelegtes, überschüssiges Pulver aus dem Aufnahmebereich entfernt werden, um das hergestellte Bauteil nach dessen Herstellung freizulegen und vorteilhaft aus dem Aufnahmebereich entfernen beziehungsweise entnehmen zu können. Üblicherweise erfolgt das Entfernen des überschüssigen Pulvers aus dem Aufnahmebereich manuell und dabei insbesondere durch manuelles Absaugen. Hierbei entstehen üblicherweise lange manuelle Absaugzeiten sowie individuelle Schwierigkeiten bei der Entfernung des überschüssigen Pulvers, insbesondere im Hinblick auf filigrane Bauteile, die durch einen zum manuellen Absaugen des Pulvers verwendeten Sauger und/oder durch einen Spachtelschieber leicht beschädigt werden können. Dies kann insbesondere daran liegen, dass ein solches filigranes Bauteil unsichtbar im Pulverbett liegt und nach seiner Herstellung insbesondere derart von überschüssigem Pulver überdeckt oder abgedeckt wird, dass das filigrane Bauteil optisch nicht wahrnehmbar ist. Ein solches manuelles Entfernen des überschüssigen Pulvers ist unter dem zukünftigen Aspekt einer Automatisierung und Digitalisierung von generativen Fertigungsverfahren nicht wirtschaftlich.

Üblicherweise wird das jeweilige Bauteil in einer auch als Arbeitskammer bezeichneten Baukammer hergestellt, in welche die Aufnahmeeinrichtung und der Aufnahmebereich angeordnet sind. In der Baukammer wird das Bauteil üblicherweise unter einer Schutzgasatmosphäre hergestellt. Um das überschüssige Pulver abzusaugen, wird herkömmlicherweise eine Systemtür geöffnet. In der Folge steht das abzusaugende, überschüssige und wiederzuverwendende, das heißt zu recycelnde, Pulver nicht mehr unter einer Schutzgasatmosphäre. Zudem kann der gesundheitliche Aspekt eine große Rolle spielen, da es wünschenswert ist, eine übermäßige Pulverbelastung einer Person beim Entfernen des überschüssigen Pulvers zu vermeiden.

Die zuvor genannten Probleme und Nachteile können nun durch die Erfindung vermieden werden, wobei eine übermäßige Pulverbelastung einer Person beim Entfernen des überschüssigen Pulvers aus dem Aufnahmebereich ebenfalls vermieden werden kann.

Grundsätzlich ist es denkbar, manuelle, das heißt manuell zu bedienende oder programmierte Saugrotober zu verwenden, welche von außen durch eine Türöffnung, welche durch Öffnen der Systemtür freigegeben wird, hindurchzubewegen und dadurch in die Baukammer beziehungsweise in den Aufnahmebereich zu bewegen. Dies ist jedoch mit hohem Zeit- und Kostenaufwand verbunden, da hierbei das überschüssige Pulver nur bauteilindividuell entfernt werden kann, insbesondere was seine Zugänglichkeit angeht. Kommt beispielsweise ein geschlossenes System mit Durchgreifhandschuhen zum Einsatz, sodass ein Öffnen der Baukammer vermieden werden kann, so sind das Bauteil und das überschüssige Pulver nur sehr schwer zu erreichen und nur sehr schwer oder nicht einsehbar, sodass ein Sauger zum Entfernen des überschüssigen Pulvers nur sehr schwer und somit zeit- und kostenintensiv gehandhabt werden kann. Im Gegensatz dazu ermöglicht es die erfindungsgemäße Vorrichtung, das überschüssige Pulver zeit- und kostengünstig sowie automatisch beziehungsweise automatisiert abzusaugen, sodass das jeweilige Bauteil insgesamt besonders zeit- und kostengünstig hergestellt werden kann. Insbesondere können im Vergleich zu herkömmlichen Vorrichtungen und Verfahren erforderliche Arbeitsschritte zum Herstellen des jeweiligen Bauteils reduziert werden. Insbesondere können Arbeitsschritte wie ein Anziehen einer Schutzkleidung, ein manuelles Saugen, ein manuelles Leeren eines Saugers und eine Handhabung einer Siebstation etc. vermieden werden. Außerdem ermöglicht es die Vorrichtung, das überschüssige Pulver systemintern und somit unter Schutzgas beziehungsweise unter Schutzgasatmosphäre zu entfernen, da beispielsweise eine auch als Kammer bezeichnete Baukammer, in welcher der Aufnahmebereich angeordnet ist und das Bauteil unter Schutzgasatmosphäre hergestellt wird, zum Entfernen des überschüssigen Pulvers nicht geöffnet werden muss. Außerdem kann beispielsweise die Anzahl an erforderlichen Saugern gering gehalten werden, sodass im Vergleich zu herkömmlichen Verfahren und Vorrichtungen eine Saugereinsparung realisierbar ist.

In vorteilhafter Ausgestaltung der Erfindung ist das jeweilige Bauteil mittels der Vorrichtung aus dem Ausgangsmaterial unter mittels der Vorrichtung bewirkbarem Erwärmen des Ausgangsmaterials in eine Aufbaurichtung schichtweise herstellbar, wobei der Aufnahmebereich auf der Seite und dabei in die Aufbaurichtung offen ist. Dabei ist der Aufnahmebereich auf der Seite und in die Aufbaurichtung zumindest teilweise, insbesondere zumindest überwiegend oder vollständig, durch die Haube überdeckt. Unter der Aufbaurichtung ist insbesondere zu verstehen, dass Schichten, aus welchen das Bauteil schichtweise und somit Schicht für Schicht hergestellt wird, in die Aufbaurichtung aufeinander angeordnet werden. Die jeweilige Schicht wird dabei auf die bezüglich der wenigstens einen Schicht beschriebene Weise mittels der Vorrichtung hergestellt. Die Aufbaurichtung verläuft dabei beispielsweise senkrecht zur zuvor genannten Ebene. Dadurch, dass nun der Aufnahmebereich in die Aufbaurichtung durch die Saughaube abgedeckt beziehungsweise überdeckt ist, kann das überschüssige Pulver effektiv und effizient abgesaugt werden, ohne dass unerwünschte Gase und/oder Fremdkörper in den Aufnahmebereich gelangen.

Eine weitere Ausführungsform zeichnet sich dadurch aus, dass zumindest ein Teilbereich der Haube, insbesondere während die Haube auf der Seite in Umfangsrichtung des Aufnahmeraums zumindest teilweise, insbesondere zumindest überwiegend oder vollständig, umlaufend mit der Aufnahmeeinrichtung abschließt, entlang einer ersten Richtung und entlang wenigstens einer senkrecht zur ersten Richtung verlaufenden zweiten Richtung relativ zu der Aufnahmeeinrichtung translatorisch bewegbar ist. Beispielsweise kann der zumindest eine Teilbereich relativ zu wenigstens einem sich an den zumindest einen Teilbereich, insbesondere direkt, anschließenden Teilbereich der Haube entlang der ersten Richtung und entlang der zweiten Richtung bewegt werden, während beispielsweise der zweite Teilbereich auf der Seite und in Umfangsrichtung des Aufnahmebereichs zumindest teilweise, insbesondere zumindest überwiegend oder vollständig, umlaufend mit der Aufnahmeeinrichtung abschließt. Hierzu ist beispielsweise die Haube, insbesondere reversibel, das heißt zerstörungsfrei und/oder elastisch, verformbar. Ferner ist es denkbar, dass die Haube an sich aus einem an sich biegeschlaffen beziehungsweise formlabilen Material gebildet ist, oder die Haube an sich ist eigensteif beziehungsweise aus einem eigensteifen und somit formstabilen Material gebildet. Ferner ist es denkbar, dass die Haube nach Art eines Balgs oder als ein Balg ausgebildet ist.

Dadurch, dass zumindest der eine Teilbereich der Haube entlang der ersten Richtung und entlang der senkrecht zur ersten Richtung verlaufenden zweiten Richtung relativ zu der Aufnahmeeinrichtung und somit relativ zu dem Aufnahmebereich translatorisch bewegt werden kann, kann das überschüssige Pulver effektiv und effizient abgesaugt werden. Insbesondere ist es beispielsweise möglich, einen durch die Saugeinrichtung bewirkten Saugstrahl bedarfsgerecht relativ zu dem Aufnahmebereich auszurichten, um dadurch das überschüssige Pulver effektiv absaugen zu können.

Bei einer besonders vorteilhaften Ausführungsform der Erfindung verlaufen die erste Richtung und die zweite Richtung in einer weiteren Ebene, wobei die Aufbaurichtung senkrecht zu der weiteren Ebene verläuft. Beispielsweise fällt die weitere Ebene mit der zuvor genannten ersten Ebene zusammen oder die erste Ebene und die weitere Ebene verlaufen parallel zueinander. Hierdurch kann der zumindest eine Teilbereich der Haube besonders vorteilhaft bewegt und relativ zu dem Aufnahmebereich ausgerichtet werden, sodass das überschüssige Pulver effektiv und effizient abgesaugt werden kann.

Bei einer besonders vorteilhaften Ausführungsform der Erfindung ist es vorgesehen, dass zumindest der Teilbereich der Haube, insbesondere während die Haube auf der Seite in Umfangsrichtung des Aufnahmeraums zumindest teilweise, insbesondere zumindest überwiegend oder vollständig, umlaufend mit der Aufnahmeeinrichtung abschließt, entlang einer senkrecht zur ersten Richtung und senkrecht zur zweiten Richtung verlaufenden und beispielsweise mit der Aufbaurichtung zusammenfallenden beziehungsweise parallel zur Aufbaurichtung verlaufenden dritten Richtung relativ zu der Aufnahmeeinrichtung translatorisch bewegbar ist. Dadurch kann beispielsweise eine Saugstärke, mit welcher das überschüssige Pulver abgesaugt wird, bedarfsgerecht eingestellt werden. Alternativ oder zusätzlich kann der zuvor genannte Saugstrahl besonders gut relativ zu dem Aufnahmebereich ausgerichtet werden, um das überschüssige Pulver effektiv und effizient absaugen zu können.

Um das Bauteil besonders zeit- und kostengünstig herstellen zu können, ist in weiterer Ausgestaltung der Erfindung ein Antrieb vorgesehen, mittels welchem zumindest der Teilbereich der Haube relativ zu der Aufnahmeeinrichtung translatorisch und vorzugsweise automatisch beziehungsweise automatisiert bewegbar ist.

Um zumindest den Teilbereich der Haube besonders vorteilhaft bewegen zu können, ist es in weiterer Ausgestaltung der Erfindung vorgesehen, dass der Antrieb elektrisch und/oder hydraulisch und/oder pneumatisch betreibbar ist. Dadurch kann das Bauteil besonders zeit- und kostengünstig hergestellt werden.

Die Vorrichtung umfasst beispielsweise eine elektronische Recheneinrichtung, mittels welcher der Antrieb beispielsweise, insbesondere automatisch, betreibbar, insbesondere steuerbar oder regelbar, ist. Die elektronische Recheneinrichtung ist beispielsweise dazu ausgebildet, wenigstens ein, insbesondere elektrisches, Signal bereitzustellen, welches auch als Ansteuersignal bezeichnet wird. Der Antrieb ist beispielsweise dazu ausgebildet, das Ansteuersignal zu empfangen. Mittels des Ansteuersignals kann die elektronische Recheneinrichtung den Antrieb, insbesondere automatisch beziehungsweise automatisiert, betreiben, insbesondere steuern oder regeln, sodass zumindest der Teilbereich der Haube über den Antrieb mittels der elektronischen Recheneinrichtung, insbesondere automatisch beziehungsweise automatisiert, bewegt werden kann. Dadurch, dass das Ansteuersignal von der Recheneinrichtung bereitgestellt und von dem Antrieb empfangen wird, wird der Antrieb mittels der Recheneinrichtung beziehungsweise von der Recheneinrichtung angesteuert und dadurch betrieben, insbesondere gesteuert oder geregelt. Hierdurch kann beispielsweise zumindest der Teilbereich der Haube automatisch beziehungsweise automatisiert bewegt werden, sodass das überschüssige Pulver besonders zeit- und kostengünstig abgesaugt und somit aus dem Aufnahmebereich entfernt werden kann.

Um das überschüssige Pulver besonders vorteilhaft absaugen zu können, ist es in weiterer Ausgestaltung der Erfindung vorgesehen, dass die Haube zumindest in einem Bereich trichterförmig ausgebildet ist. Darunter ist insbesondere zu verstehen, dass sich die Haube zumindest in dem Bereich entlang einer Erstreckungsrichtung, insbesondere von dem Aufnahmebereich weg, verjüngt. Mit anderen Worten verjüngt sich ein von dem abgesaugten oder abzusaugenden, überschüssigen Pulver durchströmbarer Strömungsquerschnitt der Haube entlang der Erstreckungsrichtung und dabei vorzugsweise von dem Aufnahmebereich weg.

Schließlich hat es sich als besonders vorteilhaft gezeigt, wenn sich zumindest der trichterförmige Bereich in die Aufbaurichtung verjüngt. Mit anderen Worten ist es vorzugsweise vorgesehen, dass sich die Saughaube zumindest in dem trichterförmigen Bereich in die Aufbaurichtung verjüngt. Wieder mit anderen Worten ausgedrückt ist es vorzugsweise vorgesehen, dass sich der Strömungsquerschnitt zumindest in dem Trichterförmigen Bereich in die Aufbaurichtung verjüngt. Hierdurch kann das überschüssige Pulver besonders zeit- und kostengünstig aus dem Aufnahmebereich abgesaugt und somit entfernt werden.

Ein zweiter Aspekt der Erfindung betrifft ein Verfahren zur additiven Fertigung wenigstens eines Bauteils mittels einer Vorrichtung, insbesondere gemäß dem ersten Aspekt der Erfindung. Bei dem Verfahren wird ein pulverförmiges Ausgangsmaterial in dem Aufnahmebereich der Vorrichtung angeordnet, wobei der Aufnahmebereich durch eine Aufnahmeeinrichtung der Vorrichtung in Umfangsrichtung des Aufnahmebereichs zumindest teilweise, insbesondere zumindest überwiegend oder vollständig, umlaufend begrenzt und an sich, das heißt für sich alleine betrachtet, auf einer Seite offen ist.

Außerdem wird bei dem Verfahren zumindest ein Teil des in dem Aufnahmebereich angeordneten, pulverförmigen Ausgangsmaterials mit wenigstens einem beispielsweise als Laserstrahl ausgebildeten Energiestrahl bestrahlt und somit beaufschlagt. Hierdurch wird zumindest der Teil des pulverförmigen Ausgangsmaterials erwärmt, wodurch zumindest aus dem Teil wenigstens eine Schicht zum schichtweisen Herstellen des Bauteils hergestellt wird. Insbesondere werden auf die beschriebene Weise nacheinander zumindest jeweilige Teile des pulverförmigen Ausgangsmaterials mit einem beziehungsweise mit dem Energiestrahl beaufschlagt, wodurch Schichten hergestellt werden. Die Schichten werden, insbesondere in die Aufbaurichtung, aufeinander angeordnet, wobei die Schichten miteinander verbunden werden. Aus den Schichten wird das Bauteil hergestellt, sodass das Bauteil schichtweise, das heißt Schicht für Schicht, hergestellt wird.

Um nun das Bauteil besonders zeit- und kostengünstig herstellen zu können, wird bei dem erfindungsgemäßen Verfahren eine Saugeinrichtung der Vorrichtung verwendet. Die Saugeinrichtung weist eine auf der Seite angeordnete, den Aufnahmeraum zumindest auf der Seite zumindest teilweise, insbesondere zumindest überwiegend oder vollständig, überdeckende und auf der Seite in Umfangsrichtung des Aufnahmeraums zumindest teilweise, insbesondere zumindest überwiegend oder vollständig, umlaufend mit der Aufnahmeeinrichtung abschließende Haube auf, über welche mittels der Saugeinrichtung zumindest ein überschüssiger Teil des pulverförmigen Ausgangsmaterials aus dem Aufnahmebereich abgesaugt wird. Vorteile und vorteilhafte Ausgestaltungen des ersten Aspekt der Erfindung sind als Vorteile und vorteilhafte Ausgestaltungen des zweiten Aspekts der Erfindung anzusehen und umgekehrt.

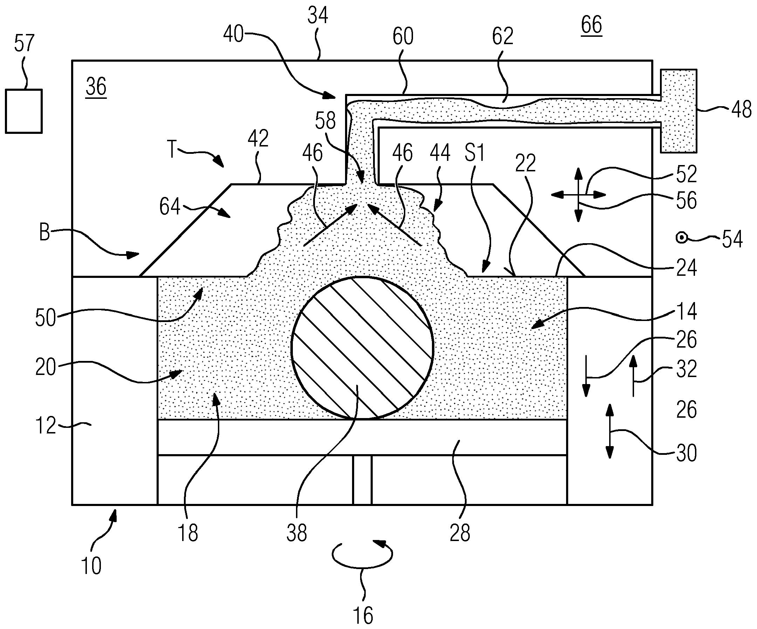

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen FIG ausschnittsweise eine schematische und geschnittene Seitenansicht einer erfindungsgemäßen Vorrichtung zur additiven Fertigung von Bauteilen.

Die einzige FIG zeigt ausschnittsweise ein einer schematischen und geschnittenen Seitenansicht eine auch als Anlage bezeichnete Vorrichtung 10 zur additiven Fertigung von Bauteilen. Dies bedeutet, dass die Vorrichtung 10 zum Durchführen wenigstens eines generativen Fertigungsverfahrens ausgebildet ist, mittels welchem das jeweilige Bauteil herstellbar ist beziehungsweise hergestellt wird. Im Folgenden wird anhand der FIG auch ein Verfahren zur additiven Fertigung des jeweiligen Bauteils beschrieben, wobei bei dem Verfahren mittels der Vorrichtung 10 das generative Fertigungsverfahren durchgeführt wird, mittels welchem das jeweilige Bauteil hergestellt und somit additiv beziehungsweise generativ gefertigt wird. Die Vorrichtung 10 weist eine auch als Plattform bezeichnete Aufnahmeeinrichtung 12 auf, welche zumindest einen auch als Aufnahmeraum bezeichneten Aufnahmebereich 14 begrenzt. Dabei begrenzt beziehungsweise umgibt die Aufnahmeeinrichtung 12 den Aufnahmebereich 14 in dessen in der FIG durch einen Pfeil 16 veranschaulichten Umfangsrichtung vollständig umlaufend.

Aus der FIG ist erkennbar, dass in dem Aufnahmebereich 14 ein einfach auch als Pulver bezeichnetes, pulverförmiges Ausgangsmaterial 18 unter Ausbildung eines Pulverbetts 20 anordenbar beziehungsweise angeordnet ist. Mit anderen Worten, im Rahmen des Verfahrens wird das Pulver unter Ausbildung des Pulverbetts 20 in dem Aufnahmebereich 14 angeordnet. Hierzu wird beispielsweise das Pulver aus einem in der FIG nicht dargestellten Reservoir mittels eines Förderelements in den Aufnahmebereich 14 bewegt und somit in den Aufnahmebereich 14 eingebracht. Hierzu wird beispielsweise das Förderelement relativ zu der Aufnahmeeinrichtung 12 entlang wenigstens einer Bewegungsrichtung, insbesondere translatorisch, bewegt. Beispielsweise wird das Pulver mittels des Förderelements in dem Aufnahmebereich 14 verteilt, insbesondere derart, dass das Pulverbett 20 beziehungsweise das das Pulverbett 20 bildende Pulver eine, zumindest im Wesentlichen glatte, Oberfläche 22 bildet. Beispielsweise ist es denkbar, dass die Oberfläche 22 mittels des Förderelements geglättet wird. Die Oberfläche 22 erstreckt sich in einer gedachten beziehungsweise virtuellen Ebene 24.

Der Aufnahmebereich 14 wird in eine in der FIG durch einen Pfeil 26 veranschaulichte erste Richtung, um welche die durch den Pfeil 16 veranschaulichte Umfangsrichtung verläuft, durch einen Tisch 28 zumindest teilweise, insbesondere zumindest überwiegend oder vollständig, begrenzt, wobei das pulverförmige Ausgangsmaterial 18 unter Ausbildung des Pulverbetts 20 auf dem Tisch 28 angeordnet ist beziehungsweise anordenbar ist oder angeordnet wird. Der Tisch 28 ist dabei entlang einer in der FIG durch einen Doppelpfeil 30 veranschaulichten Bewegungsrichtung, insbesondere mittels einer in der FIG nicht dargestellten Antriebseinrichtung der Vorrichtung 10, relativ zu der Aufnahmeeinrichtung 12, insbesondere translatorisch, bewegbar. Die Bewegungsrichtung fällt dabei mit der durch den Pfeil 26 veranschaulichten ersten Richtung zusammen beziehungsweise verläuft parallel zu der ersten Richtung. Hierdurch kann der Tisch 28, insbesondere mittels der Antriebseinrichtung, in die durch den Pfeil 26 veranschaulichte erste Richtung sowie in eine in der FIG durch einen Pfeil 32 veranschaulichte und der ersten Richtung entgegengesetzte zweite Richtung relativ zu der Aufnahmeeinrichtung 12, insbesondere translatorisch, bewegt werden. Dabei verlaufen die erste Richtung und die zweite Richtung zumindest im Wesentlichen senkrecht zu der Ebene 24 beziehungsweise zu der Oberfläche 22.

Des Weiteren ist aus der FIG erkennbar, dass der Aufnahmebereich 14 vollständig und die Aufnahmeeinrichtung 12 zumindest teilweise, insbesondere zumindest überwiegend oder vollständig, in einer beispielsweise durch ein Gehäuse 34 der Vorrichtung 10 begrenzten Baukammer 36 aufgenommen sind, welche auch einfach als Kammer oder Arbeitskammer bezeichnet wird. Dabei wird das Bauteil innerhalb der Baukammer 36 in einer in der Baukammer 36 herrschenden Schutzgasatmosphäre hergestellt. Mit anderen Worten wird das Bauteil unter der in der Baukammer 36 herrschenden Schutzgasatmosphäre hergestellt, wobei das Bauteil in der FIG schematisch gezeigt und mit 38 bezeichnet ist. Beispielsweise wird der Tisch 28 als ein Substrat verwendet, auf welchem das Bauteil 38 hergestellt wird. Durch das generative Fertigungsverfahren wird das Bauteil 38 aus mehreren Schichten und somit schichtweise beziehungsweise Schicht für Schicht hergestellt, indem die Schichten, aus welchem das Bauteil 38 hergestellt wird, aufeinander angeordnet und miteinander verbunden werden. Nachdem beispielsweise eine erste der Schichten auf dem Tisch 28 hergestellt wurde, wird der Tisch 28 ein Stück in die erste Richtung relativ zu der Aufnahmeeinrichtung 12 bewegt und somit abgesenkt. Daraufhin wird beispielsweise auf der hergestellten, ersten Schicht das pulverförmige Ausgangsmaterial 18 angeordnet, sodass beispielsweise aus dem auf der ersten Schicht angeordneten Pulver eine zweite der Schichten hergestellt wird. Die zweite Schicht wird dabei auf der ersten Schicht hergestellt und somit auf oder über der ersten Schicht angeordnet, wobei die erste Schicht und die zweite Schicht miteinander verbunden werden.

Des Weiteren ist aus der FIG erkennbar, dass der Aufnahmebereich 14 an sich auf einer Seite S1 beziehungsweise zu einer Seite S1 hin offen ist. Vorliegend ist der Aufnahmebereich 14 auf der Seite S1 und dabei in die zweite Richtung offen. Somit kann beispielsweise das Pulver von der Seite S1 aus und somit in die erste Richtung in den Aufnahmebereich 14 hineinbewegt und somit in den Aufnahmebereich 14 eingebracht werden.

Die Vorrichtung 10 weist darüber hinaus beispielsweise eine in der FIG nicht dargestellte Strahlenquelle auf, welche beispielsweise als ein Laser ausgebildet ist. Mittels der Strahlenquelle kann wenigstens ein Energiestrahl, insbesondere ein Laserstrahl, bereitgestellt werden. Um die jeweilige Schicht zum schichtweisen Herstellen des Bauteils 38 herzustellen, wird der Energiestrahl mittels der Strahlenquelle bereitgestellt, derart, dass zumindest ein Teil des Pulverbetts 20 und das heißt zumindest ein Teil des in dem Aufnahmebereich 14 angeordneten Pulvers mit dem Energiestrahl bestrahlt und somit beaufschlagt wird, insbesondere während der Energiestrahl relativ zu dem Pulverbett 20 bewegt wird. Das Pulver ist granulare Materie, welche, insbesondere eigensteif, Partikel umfasst. Die Partikel sind in einem Ausgangszustand voneinander lose, das heißt noch nicht miteinander verbunden. Wird zumindest der Teil des in dem Aufnahmebereich 14 angeordneten Pulvers mit dem Energiestrahl bestrahlt, so wird zumindest ein Teil der zunächst voneinander losen Partikel mit dem Energiestrahl bestrahlt und dadurch erwärmt. Hierdurch werden die Partikel, welche mit dem Energiestrahl bestrahlt werden, miteinander verbunden.

Beispielsweise wird zumindest der Teil des Pulvers mittels des Energiestrahls erwärmt und dadurch geschmolzen, insbesondere an- oder aufgeschmolzen, wodurch die den Teil des Pulvers bildenden und zunächst voneinander losen Partikel miteinander verbunden werden. Hierdurch wird aus dem Teil beziehungsweise wird aus den den Teil bildenden Partikeln des Pulvers die jeweilige Schicht hergestellt. Ferner ist es denkbar, dass zumindest der Teil, welcher mittels des Energiestrahls erwärmt wird, durch das Erwärmen zusammengebacken wird. Mit anderen Worten werden beispielsweise die den Teil des Pulvers bildenden Partikel mittels des Energiestrahls erwärmt und dadurch zusammengebacken. Somit kann das Bauteil 38 beispielsweise durch Schmelzen, insbesondere Laserstrahlschmelzen, oder aber durch Sintern, insbesondere Lasersintern, hergestellt werden. Da zum Herstellen des Bauteils 38 das Pulverbett 20 verwendet wird, ist das generative Fertigungsverfahren beispielsweise ein Pulverbettverfahren (PBF).

Insgesamt ist erkennbar, dass aus dem in den Aufnahmebereich 14 aufnehmbaren beziehungsweise aufgenommenen, pulverförmigen Ausgangsmaterial 18 unter mittels der Vorrichtung 10 bewirkbarem Erwärmen des pulverförmigen Ausgangsmaterials 18 das Bauteil 38 schichtweise herstellbar ist beziehungsweise hergestellt wird.

Um nun das Bauteil 38 auf besonders einfache und somit zeit- und kostengünstige Weise herstellen zu können, umfasst die Vorrichtung 10 eine Saugeinrichtung 40. Die einfach auch als Sauger oder Saugsystem bezeichnete Saugeinrichtung 40 weist eine auf der Seite S1 angeordnete, den auch als Aufnahmeraum bezeichneten Aufnahmebereich 14 zumindest auf der Seite S1 zumindest teilweise, insbesondere zumindest überwiegend oder vollständig, überdeckende und auf der Seite S1 in Umfangsrichtung des Aufnahmebereiches 14 vollständig umlaufend mit der Aufnahmeeinrichtung 12 zumindest mittelbar, insbesondere direkt, abschließende Haube 42 auf, welche, insbesondere vollständig, innerhalb der Baukammer 36 angeordnet ist und auch als Trichtersauger bezeichnet wird. Über die Haube 42 (Saughaube) ist beziehungsweise wird mittels der Saugeinrichtung 40 zumindest ein überschüssiger Teil des pulverförmigen Ausgangsmaterials 18 aus dem Aufnahmebereich 14 absaugbar beziehungsweise abgesaugt. Der überschüssige Teil des pulverförmigen Ausgangsmaterials 18 ist in der FIG mit 44 bezeichnet und wird auch als überschüssiges Pulver bezeichnet. Dabei ist das mittels der Saugeinrichtung 40 bewirkbare beziehungsweise bewirkte Absaugen des überschüssigen Pulvers in der FIG durch Pfeile 46 veranschaulicht.

Die Saugeinrichtung 40 umfasst beispielsweise einen insbesondere als Gebläse ausgebildeten Aktor 48, welche beispielsweise bezüglich des Aufnahmebereichs 14 ein Vakuum beziehungsweise einen Unterdruck erzeugt. Mittels des Vakuums beziehungsweise mittels des Unterdrucks kann das überschüssige Pulver effektiv und effizient aus dem Aufnahmebereich 14 abgesaugt werden. Insbesondere kann das überschüssige Pulver innerhalb der Baukammer 36 und/oder automatisiert abgesaugt werden, sodass beispielsweise ein unerwünschtes Eindringen von Fremdpartikeln und/oder unerwünschten Gasen in die Baukammer 36 und somit in den Aufnahmebereich 14 vermieden werden kann.

Da der Aufnahmebereich 14 an sich auf der Seite S1 und dabei in die zweite Richtung offen ist, weist der Aufnahmebereich 14 eine durch die Aufnahmeeinrichtung 12, insbesondere vollständig, begrenzte und auch als Durchgangsöffnung bezeichnete Öffnung 50 auf. Mittels der Saugeinrichtung 40 wird das überschüssige Pulver aus dem Aufnahmebereich 14 durch die Öffnung 50 hindurchgesaugt und dadurch aus dem Aufnahmebereich 14 abgesaugt. Der Aufnahmebereich 14 ist dabei beispielsweise in jede, in der Ebene 24 verlaufende Richtung durch die Aufnahmeeinrichtung 12 begrenzt.

Zumindest ein Teilbereich T der Haube 42, insbesondere die gesamte Haube 42 ist, insbesondere während die Haube 42 auf der Seite S1 in Umfangsrichtung des Aufnahmebereiches 14 vollständig umlaufend mit der Aufnahmeeinrichtung 12 abschließt, entlang einer in der FIG durch einen Doppelpfeil 52 veranschaulichten dritten Richtung und entlang einer in der FIG durch einen Doppelpfeil 54 veranschaulichten vierten Richtung relativ zu der Aufnahmeeinrichtung 12, insbesondere translatorisch, bewegbar. Dabei verlaufen die dritte Richtung und die vierte Richtung zumindest im Wesentlichen senkrecht zueinander. Die dritte Richtung und die vierte Richtung verlaufen beispielsweise in einer zweiten Ebene, welche mit der ersten Ebene 24 zusammenfällt oder parallel zur ersten Ebene 24 verläuft. Die Vorrichtung 10 umfasst hierzu beispielsweise einen in der FIG besonders schematisch dargestellten Antrieb 57, mittels welchem die Haube 42 entlang der ersten Richtung und entlang der zweiten Richtung, insbesondere elektrisch und/oder mechanische und/oder elektromechanisch und/oder hydraulisch und/oder pneumatisch, bewegbar ist beziehungsweise bewegt werden kann oder bewegt wird, insbesondere während das überschüssige Pulver mittels der Saugeinrichtung 40 aus dem Aufnahmebereich 14 abgesaugt wird. Die dritte Richtung wird beispielsweise auch als x-Richtung bezeichnet, während die vierte Richtung auch als y-Richtung bezeichnet wird.

Die durch den Pfeil 32 veranschaulichte zweite Richtung ist eine Aufbaurichtung, in welche das Bauteil 38, insbesondere ausgehend von dem Tisch 28, Schicht für Schicht hergestellt wird. Dabei verläuft die Aufbaurichtung senkrecht zu der ersten Ebene 24 und senkrecht zu der zweiten Ebene. Dabei ist es vorzugsweise vorgesehen, dass zumindest der Teilbereich T der Haube 42, insbesondere die gesamte Haube 42, entlang einer in der FIG durch einen Doppelpfeil 56 veranschaulichten fünften Richtung relativ zur Aufnahmeeinrichtung 12, insbesondere translatorisch, bewegbar ist, wobei die fünfte Richtung senkrecht zur dritten Richtung und senkrecht zur vierten Richtung verläuft. Beispielsweise wird die fünfte Richtung auch als z-Richtung bezeichnet. Insbesondere ist es denkbar, dass die Haube 42 mittels des Antriebs 57 entlang der fünften Richtung bewegbar ist beziehungsweise bewegt wird, insbesondere während mittels der Saugeinrichtung 40 das überschüssige Pulver aus dem Aufnahmebereich 14 abgesaugt wird. Dabei kann beispielsweise die Haube 42 beziehungsweise zumindest der Teilbereich T der Haube 42 entlang der fünften Richtung relativ zu der Aufnahmeeinrichtung 12 bewegt werden, während die Haube 42 auf der Seite S1 in Umfangsrichtung des Aufnahmebereiches 14 vollständig umlaufend mit der Aufnahmeeinrichtung 12 abschließt. Insbesondere ist es denkbar, dass die Haube 42 mittels des Antriebs 57 elektrisch und/oder elektromechanisch und/oder elektronisch und/oder pneumatisch und/oder hydraulisch entlang der fünften Richtung relativ zu der Aufnahmeeinrichtung 12 bewegbar ist beziehungsweise bewegt wird.

Um das überschüssige Pulver besonders effektiv und effizient absaugen zu können, ist die Haube 42 zumindest in einem Bereich B trichterförmig ausgebildet. Darunter ist insbesondere zu verstehen, dass sich die Haube 42, insbesondere ihr von dem überschüssigen Pulver durchströmbarer Strömungsquerschnitt, zumindest in dem Bereich B und dabei vorzugsweise von dem Aufnahmebereich 14 weg verjüngt. Der zuvor genannte Strömungsquerschnitt der Haube 42 ist ein Querschnitt, durch welchen das überschüssige Pulver strömt, während das überschüssige Pulver mittels der Saugeinrichtung 40 abgesaugt und dabei durch die Haube 42 gefördert wird. Aus der FIG ist erkennbar, dass die Haube 42 bei dem in der FIG gezeigten Ausführungsbeispiel entlang ihrer gesamten, entlang der Bewegungsrichtung verlaufenden Erstreckung trichterförmig ausgebildet ist, sodass sich die Haube 42 beziehungsweise ihr Strömungsquerschnitt entlang der gesamten, entlang der Bewegungsrichtung verlaufenden Erstreckung der Haube 42 von dem Aufnahmebereich 14 weg und somit in die zweite Richtung verjüngt.

Die Haube 42 an sich weist eine Durchtrittsöffnung 58 auf, über welche eine beispielsweise als Schlauch ausgebildete Leitung 60 der Saugeinrichtung 40 fluidisch mit der Haube 42 verbunden ist. Darunter ist insbesondere zu verstehen, dass ein von dem überschüssigen Pulver durchströmbarer Kanal 62 der Leitung 60 über die Durchtrittsöffnung 58 fluidisch mit einem von dem überschüssigen Pulver durchströmbaren Inneren 64 der Haube 42 fluidisch verbunden ist. Dadurch kann das überschüssige Pulver mittels der Saugeinrichtung 40 aus dem Aufnahmebereich 14 zunächst in das Innere 64 und somit in die Haube 42 und weiter über die Durchtrittsöffnung 58 in den Kanal 62 und somit in die Leitung 60 gesaugt und somit gefördert werden, insbesondere mittels des Aktors 48. Das abgesaugte, überschüssige Pulver kann beispielsweise in einem Auffangbehältnis aufgefangen und danach wiederverwendet beziehungsweise recycelt werden. Somit kann beispielsweise das abgesaugte Pulver zur Herstellung wenigstens eines weiteren Bauteils verwendet werden, indem beispielsweise das abgesaugte Pulver wieder in dem Aufnahmebereich 14 angeordnet wird, nachdem es aus dem Aufnahmebereich 14 abgesaugt wurde. Die Leitung 60 ist dabei dicht mit der Haube 42 verbunden, sodass Leckagen zwischen der Leitung 60 und der Haube 42 vermieden werden können. Beispielsweise durchdringt die Leitung 60 das Gehäuse 34 und ist vorzugsweise gegen das Gehäuse 34 abgedichtet beziehungsweise dicht mit dem Gehäuse 34 verbunden. Dadurch kann vermieden werden, dass unerwünschte Fremdpartikel und/oder Gase aus einer Umgebung 66 des Gehäuses 34 zwischen dem Gehäuse 34 und der Leitung 60 hindurchdringen und somit in die Baukammer 36 eindringen können.

Ferner ist aus der FIG erkennbar, dass sich zumindest der Bereich B beziehungsweise die Haube 42 insgesamt in die Aufbaurichtung und dabei über die gesamte, entlang der beziehungsweise in die Aufbaurichtung verlaufende Erstreckung der Haube 42 verjüngt, sodass das überschüssige Pulver effektiv und effizient abgesaugt werden kann.

### Bezugszeichenliste

- 10: Vorrichtung
- 12: Aufnahmeeinrichtung
- 14: Aufnahmebereich
- 16: Pfeil
- 18: pulverförmiges Ausgangsmaterial
- 20: Pulverbett
- 22: Oberfläche
- 24: Ebene
- 26: Pfeil
- 28: Tisch
- 30: Doppelpfeil
- 32: Pfeil
- 34: Gehäuse
- 36: Baukammer
- 38: Bauteil
- 40: Saugeinrichtung
- 42: Haube
- 44: überschüssiger Teil
- 46: Pfeil
- 48: Aktor
- 50: Öffnung
- 52: Doppelpfeil
- 54: Doppelpfeil
- 56: Doppelpfeil
- 57: Antrieb
- 58: Durchtrittsöffnung
- 60: Leitung
- 62: Kanal
- 64: Inneres
- 66: Umgebung
- B: Bereich
- S1: Seite
- T: Teilbereich

## Patentansprüche

1. Vorrichtung (10) zur additiven Fertigung von Bauteilen (38), mit wenigstens einer Aufnahmeeinrichtung (12), welche zumindest einen Aufnahmebereich (14) in Umfangsrichtung (16) des Aufnahmebereiches (14) zumindest teilweise umlaufend begrenzt, wobei in dem Aufnahmebereich (14), welcher an sich auf einer Seite (S1) offen ist, wenigstens ein pulverförmiges Ausgangsmaterial (18) aufnehmbar ist, aus welchem das jeweilige Bauteil (38) unter mittels der Vorrichtung (10) bewirkbarem Erwärmen des pulverförmigen Ausgangsmaterials (18) schichtweise herstellbar ist,
**gekennzeichnet durch**
eine Saugeinrichtung (40), welche eine auf der Seite (S1) angeordnete, den Aufnahmebereich (14) zumindest auf der Seite (S1) zumindest teilweise überdeckende und auf der Seite (S1) in Umfangsrichtung (16) des Aufnahmebereiches (14) zumindest teilweise umlaufend mit der Aufnahmeeinrichtung (!2) abschließende Haube (42) aufweist, über welche mittels der Saugeinrichtung (40) zumindest ein überschüssiger Teil (44) des pulverförmigen Ausgangsmaterials (18) aus dem Aufnahmebereich (14) absaugbar ist.

2. Vorrichtung (10) nach Anspruch 1,
**dadurch gekennzeichnet, dass**
das jeweilige Bauteil (38) aus dem Ausgangsmaterial (18) unter mittels der Vorrichtung (10) bewirkbarem Erwärmen des Ausgangsmaterials (18) in eine Aufbaurichtung (32) schichtweise herstellbar ist, wobei der Aufnahmebereich (14) auf der Seite (S1) und in die Aufbaurichtung (32) offen ist und wobei der Aufnahmebereich (14) auf der Seite (S1) und in die Aufbaurichtung (32) zumindest teilweise durch die Haube (42) überdeckt ist.

3. Vorrichtung (10) nach Anspruch 1 oder 2,
**dadurch gekennzeichnet, dass**
zumindest ein Teilbereich (T) der Haube (42), insbesondere während die Haube (42) auf der Seite (S1) in Umfangsrichtung (16) des Aufnahmebereiches (14) zumindest teilweise umlaufend mit der Aufnahmeeinrichtung (12) abschließt, entlang einer ersten Richtung (52) und entlang wenigstens einer senkrecht zur ersten Richtung (52) verlaufenden zweiten Richtung (54) relativ zu der Aufnahmeeinrichtung (12) translatorisch bewegbar ist.

4. Vorrichtung (10) nach den Ansprüchen 2 und 3,
**dadurch gekennzeichnet, dass**
die erste Richtung (52) und die zweite Richtung (54) in einer Ebene (24) verlaufen, wobei die Aufbaurichtung (32) senkrecht zu der Ebene (24) verläuft.

5. Vorrichtung (10) nach Anspruch 3 oder 4,
**dadurch gekennzeichnet, dass**
zumindest der Teilbereich (T) der Haube, insbesondere während die Haube (42) auf der Seite (S1) in Umfangsrichtung (16) des Aufnahmebereiches (14) zumindest teilweise umlaufend mit der Aufnahmeeinrichtung (12) abschließt, entlang einer senkrecht zur ersten Richtung (52) und senkrecht zur zweiten Richtung (54) verlaufenden dritten Richtung (56) relativ zu der Aufnahmeeinrichtung (12) translatorisch bewegbar ist.

6. Vorrichtung (10) nach einem der Ansprüche 2 bis 5,
**gekennzeichnet durch**
einen Antrieb (57), mittels welchem zumindest der Teilbereich (T) der Haube (42) relativ zu der Aufnahmeeinrichtung (12) translatorisch bewegbar ist.

7. Vorrichtung (10) nach Anspruch 6,
**dadurch gekennzeichnet, dass**
der Antrieb (57) elektrisch und/oder hydraulisch und/oder pneumatisch betreibbar ist.

8. Vorrichtung (10) nach einem der vorhergehenden Ansprüche,
**dadurch gekennzeichnet, dass**
die Haube (42) zumindest in einem Bereich (B) trichterförmig ausgebildet ist.

9. Vorrichtung (10) nach Anspruch 8,
**dadurch gekennzeichnet, dass**
sich zumindest der trichterförmige Bereich (B) in die Aufbaurichtung (32) verjüngt.

10. Verfahren zur additiven Fertigung wenigstens eines Bauteils (38) mittels einer Vorrichtung (10), mit den Schritten:
- Anordnen wenigstens eines pulverförmigen Ausgangsmaterials (18) in einem Aufnahmebereich (14), welcher durch eine Aufnahmeeinrichtung (12) der Vorrichtung (10) in Umfangsrichtung (16) des Aufnahmebereiches (14) zumindest teilweise umlaufend begrenzt und an sich auf einer Seite (S1) offen ist; und
- Bestrahlen zumindest eines Teils des in dem Aufnahmebereich (14) angeordneten, pulverförmigen Ausgangsmaterials (18) mit wenigstens einem Energiestrahl, wodurch zumindest der Teil erwärmt und zumindest aus dem Teil wenigstens eine Schicht zum schichtweisen Herstellen des Bauteils (38) hergestellt wird;
**gekennzeichnet durch**
eine Saugeinrichtung (40), welche eine auf der Seite (S1) angeordnete, den Aufnahmebereich (14) zumindest auf der Seite (S1) zumindest teilweise überdeckende und auf der Seite (S1) in Umfangsrichtung (16) des Aufnahmebereiches (14) zumindest teilweise umlaufend mit der Aufnahmeeinrichtung (12) abschließende Haube (42) aufweist, über welche mittels der Saugeinrichtung (40) zumindest ein überschüssiger Teil (44) des pulverförmigen Ausgangsmaterials (18) aus dem Aufnahmebereich (14) abgesaugt wird.
